# EUROPÄISCHE PATENTANMELDUNG

(11) **EP 1 248 275 A2**
(43) Veröffentlichungstag der Anmeldung: **09.10.2002**
(21) Anmeldenummer: 02004802.1
(22) Anmeldetag: 02.03.2002
(51) Int. Cl.: H01H 9/18

(54) **Taste oder Blende, insbesondere Taste oder Blende für einen Schalter, sowie Verfahren zur Herstellung**

(30) Priorität: 04.04.2001 DE 10116633
(71) Anmelder: Valeo Schalter und Sensoren GmbH, 74321 Bietigheim-Bissingen (DE)
(72) Erfinder: Mattern, Heinz, 74199 Untergruppenbach (DE); Spazierer, Hubert, 74321 Bietigheim-Bissingen (DE)
(74) Vertreter: Dreiss, Fuhlendorf, Steimle & Becker

(57) **Zusammenfassung**

Die Erfindung betrifft eine Taste oder Blende, insbesondere für einen Schalter, mit einem Grundkörper, mit einer Körperfarbe und mit wenigstens zwei auf dem Grundkörper vorhandenen, dem Betrachter zugewandten Farbschichten.

Die Erfindung kennzeichnet sich dadurch, dass die dem Betrachter zugewandte Farbschicht mittels Laserbearbeitung wenigstens abschnittsweise abgetragen ist und so mehrfarbige Symbole einfach und genau dargestellt werden.

## Beschreibung

Die Erfindung betrifft eine Taste oder Blende, insbesondere für einen Schalter, mit einem Grundkörper, der eine Körperfarbe aufweist, und mit wenigstens einer und vorzugsweise wenigstens zwei auf dem Grundkörper vorhandenen, dem Betrachter zugewandten Farbschichten. Die Farbschichten können hierbei unmittelbar oder mittelbar auf dem Grundkörper aufgebracht sein. Die Erfindung betrifft außerdem einen Schalter mit einer derartigen Taste oder Blende. Die Erfindung betrifft auch ein Verfahren zur Herstellung einer solchen Taste oder Blende bzw. eines solchen Schalters.

Tasten oder Blenden für Schalter finden insbesondere im Fahrzeugbau vielseitig Verwendung. Hierbei besteht das Bedürfnis, die dem Betrachter zugewandte Oberseite der Taste oder Blende mit Symbolen oder einer entsprechenden Farbgebung auszugestalten. Unter Farbgebung wird im Nachfolgenden auch eine weiße, schwarze oder graue Ausgestaltung verstanden.

Zur Realisierung einer mindestens dreifarbigen Taste bestehen verschiedene Herstellungsmöglichkeiten. Insbesondere werden zur Darstellung mehrfarbiger Symbole Verfahren wie Mehrkomponentenspritzguß, Bedruckungsverfahren sowie Folienhinterspritzen eingesetzt.

Nach einem anderen Stand der Technik werden die Tasten oder Blenden mit mehreren Farben sequentiell ohne gegenseitige Überdeckung bedruckt. Ein derartiges Bedrucken erfordert sehr hohe Genauigkeiten.

Der vorliegenden Erfindung liegt deshalb die Aufgabe zugrunde, eine Taste oder Blende der eingangs genannten Art bereitzustellen, die eine kostengünstig herzustellende und dennoch hoch präzise zwei, drei- oder mehrfarbige Oberseite aufweist.

Diese Aufgabe wird erfindungsgemäß dadurch gelöst, dass die dem Betrachter zugewandte Farbschicht mittels Laserbearbeitung wenigstens abschnittsweise abgetragen ist. Bei Vorhandensein lediglich einer Farbschicht auf dem Grundkörper kann eine zweifarbige Oberseite der Taste durch abschnittsweises, definiertes Abtragen der einen Farbschicht realisiert werden. An Stellen, an denen die Farbschicht abgetragen wurde, ist demnach die Körperfarbe des Grundkörpers sichtbar. Aufgrund der Laserbearbeitung kann das Abtragen hoch präzise und dennoch sehr kostengünstig erfolgen.

Bei einer bevorzugten Ausführungsform der Erfindung sind zwischen der dem Betrachter zugewandten Farbschicht und dem Grundkörper zwei Farbschichten vorhanden, wobei gegebenenfalls je nach Bedarf ein Abtragen von lediglich der dem Betrachter zugewandten Farbschicht oder zusätzlich ein Abtragen der zwischen dieser dem Betrachter zugewandten Farbschicht und dem Grundkörper liegenden Farbschicht bzw. Farbschichten erfolgt. Dies wird nachfolgend als schichtselektives Abtragen bezeichnet. Bei Vorhandensein von mehr als zwei Farbschichten kann demnach die dem Betrachter zugewandte Oberseite der Taste oder Blende drei- oder mehrfarbig ausgebildet sein. Unter Berücksichtigung der Körperfarbe können bei Vorhandensein von zwei Farbschichten auf dem Grundkörper drei Farben realisiert werden. Bei drei aufgetragenen Farbschichten lässt sich eine vierfarbige Oberseite der Taste oder Blende realisieren. Bei vier Farbschichten kann die Oberseite fünffarbig ausgebildet werden. Je nachdem, wie viele Farbschichten mittels der Laserbearbeitung abgetragen werden, werden die freigelegten, nicht abgetragenen Farbschichtabschnitte für den Betrachter sichtbar. Auf diese Art und Weise lassen sich folglich mehrfarbige, hoch präzise Darstellungen auf der dem Betrachter zugewandten Oberseite der entsprechenden Taste oder Blende realisieren.

Vorteilhafterweise kann erfindungsgemäß vorgesehen sein, dass der dem Betrachter zugewandte, verbleibende und sichtbare Farbschichtabschnitt bzw. die dem Betrachter zugewandten, verbleibenden und sichtbaren Farbschichtabschnitte Tastensymbole oder dekorative Muster, insbesondere Holzstruktur- oder Metallgeflechtnachbildungen, bilden. Gerade durch Verwendung von mehreren Farbschichten, die abschnittsweise schichtselektiv abgetragen werden, lassen sich Tasten- oder Blendenoberseiten mit komplexen Oberseiten realisieren.

Zur definierten Abtragung der jeweiligen Farbschichten mittels einer Laserbearbeitung kann erfindungsgemäß vorgesehen sein, dass jede Farbschicht einen charakteristischen Abtragungsparameter aufweist. Mittels modernen Lasern können aufgrund der verschiedenen Abtragungsparameter lediglich die gewünschten, abzutragenden Farbschichten abgetragen werden. Nicht abzutragende Farbschichten verbleiben aufgrund ihres anderen Abtragungsparameters auf der Oberseite der Taste oder Blende.

Erfindungsgemäß ist auch möglich, dass zwischen den Farbschichten ein Medium vorhanden ist, das einen charakteristischen Abtragungsparameter aufweist. Ein derartiges Medium kann beispielsweise eine entsprechende Lackschicht sein, die die Grenzeschicht zwischen den Farbschichten bildet. Derartige Lackschichten können beispielsweise von einem entsprechenden Laser erkannt werden. Die Abtragung erfolgt dann lediglich bis zu dieser Lackschicht.

Weiterhin ist denkbar, dass die Farbschichten eine definierte Dicke aufweisen, die mittels Laserbearbeitung abgetragen wird. Moderne Laser bieten hierbei die Möglichkeit, definierte Schichttiefen abzutragen. Demnach ist es denkbar, aufgrund der definierten Dicke der Farbschichten diese an den vorgesehenen Stellen abzutragen.

Vorteilhafterweise kann erfindungsgemäß vorgesehen sein, dass der Grundkörper eine weiße Farbe aufweist und wenigstens bedingt transluzent ist. Ebenso ist denkbar, dass die Farbschichten wenigstens bedingt transluzent sind. Dies hat den Vorteil, dass auf der dem Betrachter abgewandten Seite des Grundkörpers der Taste ein Licht emittierendes Element angebracht werden kann, das den Grundkörper und gegebenenfalls die entsprechenden Farbschichten wenigstens bedingt durchleuchtet. Eine derartige Durchleuchtung trägt zur besseren Erkennung der erfindungsgemäß hergestellten Tastensymbole bei.

Die eingangs genannte Aufgabe wird außerdem durch einen Schalter mit einer im Vorhergehenden beschriebenen Taste oder Blende gelöst.

Weiterhin wird die eingangs genannte Aufgabe durch ein Verfahren zur Herstellung einer im Vorhergehenden beschriebenen Taste oder Blende oder auch eines erfindungsgsgemäßen Schalters gelöst, das folgende Verfahrensschritte aufweist:
(a) Aufbringen von einer dem Betrachter zugewandten Farbschicht auf den Grundkörper oder von mehreren übereinander liegenden Farbschichten auf den Grundkörper, und
(b) abschnittsweises und schichtselektives Abtragen wenigstens der dem Betrachter zugewandten Farbschicht mittels Laserbearbeitung.

Hierbei ist insbesondere denkbar, dass beim Verfahrensschritt (b) je nach Bedarf ein Abtragen von lediglich der dem Betrachter zugewandten Farbschicht und gegebenenfalls zusätzlich ein Abtragen der zwischen dieser Farbschicht und dem Grundkörper liegenden Farbschicht bzw. Farbschichten erfolgt.

Ein derartiges Verfahren ist auf einfache Art und Weise kostengünstig zu realisieren, weil eine hoch präzise Darstellung von vorzugsweise drei- oder mehrfarbigen Tasten- oder Blendenoberflächen ohne weiteres möglich ist.

Erfindungsgemäß ist insbesondere ebenfalls denkbar, dass bei Verfahrensschritt (a) die Farbschichten durch Lackieren, Aufdrucken oder Aufkleben aufgebracht werden. Ein derartiges Aufbringen der Farbschichten kann auf herkömmliche und bekannte Art und Weise erfolgen.

Weitere vorteilhafte Ausgestaltungen und Einzelheiten der Erfindung sind der folgenden Beschreibung zu entnehmen, in der die Erfindung anhand der in der Zeichnung dargestellten Ausführungsbeispiele näher beschrieben und erläutert ist.

Es zeigen:
- Fig. 1:: eine erfindungsgemäße Taste oder Blende eines Schalters in Draufsicht;
- Fig. 2:: einen Schnitt durch die Taste oder Blende gemäß Fig. 1 entlang der Linie II; und
- Fig. 3:: einen der Fig. 2 entsprechenden Schnitt durch eine andere erfindungsgemäße Taste oder Blende.

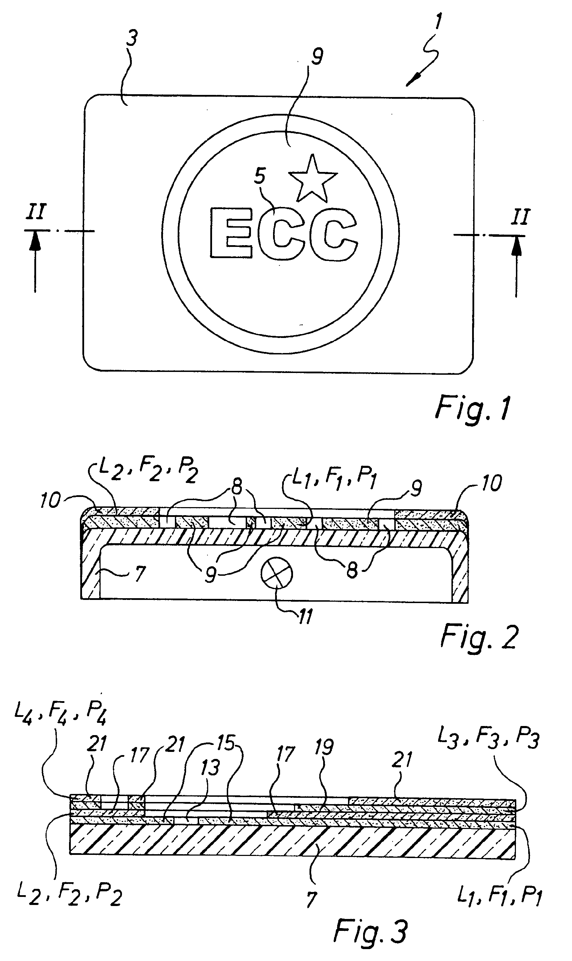

Der in Fig. 1 gezeigte Schalter 1 weist auf seiner dem Betrachter zugewandten Seite eine Taste 3 bzw. eine Blende auf. Die Oberseite der Taste 3 zeigt ein Tastensymbol 5 in Form von den Buchstaben ECC, die von einem Ring umgeben werden. Außerdem ist über den Buchstaben ECC ein Stern angeordnet. Anstelle eines Tastensymbols wäre es auch denkbar, ein dekoratives Muster, insbesondere eine Holzstruktur- oder eine Metallgeflechtnachbildung, darzustellen. Die Oberseite der Taste 3 ist vorzugsweise drei- oder mehrfarbig ausgestaltet.

In dem in Fig. 2 dargestellten Schnitt durch die Taste 3 ist ein Grundkörper 7 zu sehen. Auf dem Grundkörper 7 ist eine erste Farbschicht L₁ mit einer Farbe F₁ aufgebracht. Auf dieser Farbschicht L₁ liegt eine weitere Farbschicht L₂ mit der Farbe F₂.

Da auf dem in Fig. 2 gezeigten Grundkörper 7 zwei Farbschichten aufgebracht sind, handelt es sich bei der Farbschicht L₂ um die dem Betrachter zugewandte Farbschicht (in den Patentansprüchen ist demnach mit Lₓ die Farbschicht L₂ gemeint).

Zur Ausbildung des Tastensymbols 5 wurde die dem Betrachter zugewandte Farbschicht L₂ sowie die zwischen der Farbschicht L₂ und dem Grundkörper 7 liegende Farbschicht L₁ mittels einer Laserbearbeitung abschnittsweise und schichtselektiv abgetragen. Die Farbschicht L₁ weist hierbei charakteristische Abtragungsparameter P₁ und die Farbschicht L₂ charakteristische Abtragungsparameter P₂ auf. Aufgrund der Kenntnis dieser Abtragungsparameter P₁ und P₂ ist es technisch möglich, lediglich nur die Farbschicht L₂ abschnittsweise abzutragen, so dass die Farbschicht L₁ auf dem Grundkörper 7 verbleibt. Die verbleibenden, für den Betrachter sichtbaren Farbabschnitte der Farbschicht L₁ sind mit der Bezugszahl 9 gekennzeichnet. Sie umgeben die Buchstaben ECC sowie den Stern und grenzen an den Ring an. Die verbleibenden, für der Betrachter sichtbaren Farbabschnitte der Farbschicht L₂ tragen die Bezugszahl 10.

Um die Buchstaben ECC, den Stern und den Ring zu realisieren, wurden in den mit der Bezugszahl 8 gekennzeichnet Bereichen die Farbschichten L₁ und L₂ mittels Laserbearbeitung abgetragen. An diesen Stellen 8 ist der Grundkörper sichtbar. Die Farbe der Buchstaben ECC, des Sterns und des Ring ist demnach die Farbe des Grundkörpers 7.

Erfindungsgemäß ist weiterhin denkbar, dass zwischen den Farbschichten ein Medium, beispielsweise eine definierte Lackschicht, vorhanden ist, das einen charakteristischen Abtragungsparameter aufweist. Hierdurch wird eine definierte Abtragungstiefe während der Laserbearbeitung gewährleistet.

Es ist ebenfalls erfindungsgemäß denkbar, dass die Farbschichten eine definierte Dicke aufweisen. Mittels moderner Lasertechnik ist es möglich, diese definierte Dicke abzutragen.

Der Grundkörper 7 ist vorzugsweise aus einem hellen oder weißen Material und ist wenigstens bedingt transluzent. Wie in Fig. 2 angedeutet ist, ist auf der dem Betrachter abgewandten Seite der Taste 3 ein Licht emittierendes Element 11 vorhanden, das dazu geeignet ist, den Grundkörper 7 sowie die Farbschicht L₁ wenigstens abschnittsweise zu durchleuchten. Dies hat den Vorteil, dass das Tastensymbol 5 für den Betrachter auch bei ungünstigen Lichtverhältnissen deutlich zu erkennen ist.

Fig. 3 zeigt einen Schnitt durch eine weitere erfindungsgemäße Taste, auf deren Oberseite vier Farbschichten L₁, L₂, L₃ und L₄ aufgebracht sind. Die unmittelbar auf dem Grundkörper 7 aufliegende Farbschicht ist die Farbschicht L₁. Bei der dem Betrachter zugewandten Farbschicht handelt es sich um die Farbschicht L₄ (L₄ entspricht der in den Patentansprüchen mit Lₓ bezeichneten Farbschicht). Aufgrund der Verwendung von vier Farbschichten L₁ - L₄ kann die dem Betrachter zugewandte Oberseite der Taste 3 insgesamt fünffarbig ausgebildet werden. Neben den vier verschiedenen Farben F₁ - F₄ der vier Farbschichten L₁ - L₄ kann durch die Abtragung sämtlicher Farbschichten die Farbe des Grundkörpers 7 als fünfte Farbe sichtbar werden.

In der Fig. 3 ist der Bereich des Grundkörpers 7, der für den Betrachter sichtbar ist, mit 13 gekennzeichnet. Der sichtbare Bereich der Farbschicht L₁ ist mit 15 gekennzeichnet. Der sichtbare Abschnitt der Farbschicht L₂ ist mit dem Bezugszeichen 17 versehen. Der die Farbe F₃ aufweisende, für den Betrachter sichtbare Bereich trägt das Bezugszeichen 19. Mit dem Bezugszeichen 21 ist der sichtbare Farbabschnitt gekennzeichnet, der die Farbe F₄ der Farbschicht L₄ aufweist.

Bei den Ausführungsformen der Erfindung gemäß der Fig. 1 - 3 werden die Farbschichten L_{1,} L₂ bzw. L₁ - L₄ durch Lackieren, Aufdrucken oder Aufkleben auf den Grundkörper 7 aufgebracht. In einem nächsten Arbeitsschritt wird wenigstens die dem Betrachter zugewandte Farbschicht L₂ bzw. L₄ mittels Laserbearbeitung abschnittsweise abgetragen. Je nach Bedarf wird lediglich die dem Betrachter zugewandte Farbschicht L₂ bzw. L₄ oder werden auch die zwischen dieser Farbschicht L₂ bzw. L₄ vorhandenen Farbschichten L₁ bzw. L₁ - L₃ zusätzlich an definierten Stellen abgetragen. Hierdurch können zwei- oder mehrfarbige Tastensymbole 5 mit sehr geringem Aufwand realisiert werden. Die Farben der in den Fig. 1 - 3 dargestellten Farbschichten L₁, L₂ bzw. L₁ - L₄ können auch Schwarz-, Weiß- oder auch Grauabstufungen beinhalten.

Alle in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Taste (3) oder Blende, insbesondere für einen Schalter (1), mit einem Grundkörper (7), der eine Körperfarbe aufweist, und mit wenigstens einer auf dem Grundkörper (7) vorhandenen, dem Betrachter zugewandten Farbschicht (Lₓ), **dadurch gekennzeichnet, dass** die dem Betrachter zugewandte Farbschicht (Lₓ) mittels Laserbearbeitung wenigstens abschnittsweise abgetragen ist.

2. Taste (3) oder Blende nach Anspruch 1, **dadurch gekennzeichnet, dass** zwischen der dem Betrachter zugewandten Farbschicht (Lₓ) und dem Grundkörper (7) wenigstens eine weitere Farbschicht (L₁ bis Lₓ₋₁) vorhanden ist und dass gegebenenfalls je nach Bedarf ein Abtragen von lediglich der dem Betrachter zugewandten Farbschicht (Lₓ) oder zusätzlich ein Abtragen der zwischen dieser Farbschicht (Lₓ) und dem Grundkörper (7) liegenden Farbschicht bzw. Farbschichten (L₁ bis Lₓ₋₁) erfolgt.

3. Taste (3) oder Blende nach Anspruch 1 oder 2, **dadurch gekennzeichnet, dass** der dem Betrachter zugewandte, verbleibende und sichtbare Farbschichtabschnitt bzw. verbleibenden und sichtbaren Farbschichtenabschnitte (9, 10 bzw. 15, 17, 19, 21) Tastensymbole (5) oder dekorative Muster, insbesondere Holzstruktur- oder Metallgeflechtnachbildungen, bilden.

4. Taste (3) oder Blende nach Anspruch 1, 2 oder 3, **dadurch gekennzeichnet, dass** jede Farbschicht (L₁ bis Lₓ) einen charakteristischen Abtragungsparameter (P₁ bis Pₓ) aufweist.

5. Taste (3) oder Blende nach einem der vorhergehenden Ansprüche, **dadurch gekennzeichnet, dass** zwischen den Farbschichten (L₁ bis Lₓ) ein Medium vorhanden ist, das einen charakteristischen Abtragungsparameter (P₁ bis Pₓ) aufweist.

6. Taste (3) oder Blende nach einem der vorhergehenden Ansprüche, **dadurch gekennzeichnet, dass** die Farbschichten (L₁ bis Lₓ) eine definierte Dicke aufweisen, die mittels der Laserbearbeitung abgetragen wird.

7. Taste (3) oder Blende nach einem der vorhergehenden Ansprüche, **dadurch gekennzeichnet, dass** der Grundkörper (7) eine weiße Farbe (F_{K}) aufweist und wenigstens bedingt transluzent ist.

8. Taste (3) oder Blende nach einem der vorhergehenden Ansprüche, **dadurch gekennzeichnet, dass** wenigstens eine Farbschicht (L₁ bis Lₓ) bedingt transluzent ist.

9. Taste (3) oder Blende nach einem der vorhergehenden Ansprüche, **dadurch gekennzeichnet, dass** auf der dem Betrachter abgewandten Seite der Taste (3) oder Blende eine Leuchte (11) vorhanden ist, die den Grundkörper (7) und die Farbschicht bzw. Farbschichten (L₁ bis Lₓ) wenigstens abschnittsweise durchleuchtet.

10. Taste (3) oder Blende nach einem der vorhergehenden Ansprüche, **dadurch gekennzeichnet, dass** die Farbschichten (L₁ bis Lₓ) durch Lackieren, Aufdrucken oder Aufkleben aufgebracht sind.

11. Schalter (1) mit einer Taste (3) oder Blende nach wenigstens einem der vorhergehenden Ansprüche.

12. Verfahren zur Herstellung einer Taste (3) oder Blende nach einem der Ansprüche 1 bis 10 oder eines Schalters (1) nach Anspruch 11, **gekennzeichnet durch** folgende Verfahrensschritte:
(a) Aufbringen von einer dem Betrachter zugewandten Farbschicht (Lₓ) auf den Grundkörper (7) oder von mehreren übereinander liegenden Farbschichten (L₁ bis Lₓ) auf den Grundkörper (7), und,
(b) abschnittsweises, schichtselektives Abtragen wenigstens der dem Betrachter zugewandten Farbschicht (Lₓ) mittels Laserbearbeitung.

13. Verfahren nach Anspruch 12, **dadurch gekennzeichnet, dass** bei Verfahrensschritt (b) je nach Bedarf ein Abtragen von lediglich der dem Betrachter zugewandten Farbschicht (Lₓ) und gegebenenfalls zusätzlich ein Abtragen der zwischen dieser Farbschicht (Lₓ) und dem Grundkörper (7) liegenden Farbschicht bzw. Farbschichten (L₁ bis Lₓ₋₁) erfolgt.

14. Verfahren nach Anspruch 12 oder 13, **dadurch gekennzeichnet, dass** jede der Farbschicht (L₁ bis Lₓ) einen charakteristischen Abtragungsparameter (P₁ bis Pₓ) aufweist.

15. Verfahren nach Anspruch 12, 13 oder 14, **dadurch gekennzeichnet, dass** zwischen den Farbschichten (L₁ bis Lₓ) ein Medium vorhanden ist, das einen charakteristischen Abtragungsparameter (P₁ bis Pₓ) aufweist.

16. Verfahren nach einem der Ansprüche 12 bis 15, **dadurch gekennzeichnet, dass** die Farbschichten (L₁ bis Lₓ) eine definierte Dicke aufweisen, die mittels der Laserbearbeitung abgetragen wird.

17. Verfahren nach einem der Ansprüche 12 bis 16, **dadurch gekennzeichnet, dass** bei Verfahrensschritt (a) die Farbschichten (L₁ bis Lₓ) durch Lackieren, Aufdrucken oder Aufkleben aufgebracht werden.
